# EUROPEAN PATENT APPLICATION

(11) **EP 4 580 087 A1**
(43) Date of publication of application: **02.07.2025**
(21) Application number: 24822333.1
(22) Date of filing: 21.03.2024
(51) Int. Cl.: H04B 10/25

(54) **METHOD, APPARATUS AND SYSTEM FOR CONTROLLING SIGNAL TRANSMISSION, STORAGE MEDIUM, AND ELECTRONIC DEVICE**

(30) Priority: 13.06.2023 CN 202310696041
(71) Applicant: Suzhou Metabrain Intelligent Technology Co., Ltd., Suzhou, Jiangsu 215000 (CN)
(72) Inventor: ZHAO, Weikang, Suzhou, Jiangsu 215000 (CN); YANG, Caikun, Suzhou, Jiangsu 215000 (CN); GAO, Xianyang, Suzhou, Jiangsu 215000 (CN); YAO, Guanjie, Suzhou, Jiangsu 215000 (CN); CI, Tanlong, Suzhou, Jiangsu 215000 (CN)
(74) Representative: Studio Torta S.p.A.
(86) International application number: PCT/CN2024/083113
(87) International publication number: WO 2024/255377

(57) **Abstract**

Embodiments of the present application provide a methd, apparatus, and system for controlling signal transmission, a non-volatile readable storage medium, and an electronic device. The method includes: receiving, through a first link, a first signal sent by a first device, where the first link connects the first device to a relay control device, the relay control device is a device supporting an open interconnection standard CXL protocol, and the first signal is an electrical signal; determining a link status of the first link by using the first signal; and sending a control instruction to a microcontroller unit (MCU) device based on the link status of the first link, to control transmission of the first signal via the MCU device, where the MCU device is connected to the relay control device. According to the present application, a problem that a data signal defined in the CXL protocol cannot be transmitted between devices through an optical fiber link in a related art is solved. Then, an effect of transmitting the data signal defined in the CXL protocol between the devices through the optical fiber link is achieved.

## Description

### Cross-Reference to Related Application

The present application claims priority to Chinese Patent Application No. 202310696041.8, filed with the Chinese Patent Office on June 13, 2023 and entitled "METHOD, APPARATUS, AND SYSTEM FOR CONTROLLING SIGNAL TRANSMISSION, STORAGE MEDIUM, AND ELECTRONIC DEVICE", which is incorporated herein by reference in its entirety.

### Technical Field

Embodiments of the present application relate to the field of computers, and specifically, to a method, apparatus, and system for controlling signal transmission, a non-volatile readable storage medium, and an electronic device.

### Background

With rapid development of high-speed interconnection technologies, high-speed interconnection protocols also continuously change. A CXL (Computer Express Link, a new open interconnection standard) protocol is an open interconnection standard protocol formulated by Intel (Intel Corporation) as an initiator, may be used for a high-rate and low-delay connection between an internal central processing unit (Central Processing Unit, CPU for short) of a server and a device like a graphics processing unit (Graphics Processing Unit, GPU for short), a hard disk, or a network interface card, and may also be used for a high-rate and low-delay connection between an external server and the server or between the server and an external device like a memory resource pool or a GPU resource pool.

However, in the prior art, a method for integrating a CXL interface controller with the CPU to form a single SoC (System on a Chip, system on a chip) is usually used, is applicable to a CXL optical interconnection of an internal CPU of a host like a single server, and is not applicable to a CXL external optical interconnection. An interconnection between the host like the server and an external memory resource pool or acceleration computing resource pool cannot be implemented. In addition, in an existing technical solution, an incompatible link training process between an optical fiber link and the CXL protocol is directly skipped. This requires setting a corresponding link state between the CPU and the device in advance, and is not suitable for an external interconnection architecture that needs to be flexibly expanded, for example, a resource pool.

It can be learned that a problem that a data signal defined in the CXL protocol cannot be transmitted between devices through the optical fiber link exists in a related art.

### SUMMARY

Embodiments of the present application provide a method, apparatus, and system for controlling signal transmission, a non-volatile readable storage medium, and an electronic device, to solve at least a problem that a data signal defined in a CXL protocol cannot be transmitted between devices through an optical fiber link in a related art.

According to an optional embodiment of the present application, a method for controlling signal transmission is provided, applied to a relay control device, and including: A first signal sent by a first device is received through a first link, where the first link connects the first device to the relay control device, the relay control device is a device supporting an open interconnection standard CXL protocol, and the first signal is an electrical signal; a link status of the first link is determined by using the first signal; and a control instruction is sent to a microcontroller unit (MCU) device based on the link status of the first link, to control transmission of the first signal via the MCU device, where the MCU device is connected to the relay control device.

According to another optional embodiment of the present application, a method for controlling signal transmission is provided, applied to an MCU device, and including: a second signal sent by a second device is obtained, where the second signal is obtained by performing electrical signal conversion on a received optical signal by an optical receiver, and the optical signal is sent by the second device; and the second signal is transmitted to a relay control device, where the relay control device is a device supporting an open interconnection standard CXL protocol, and the relay control device is configured to transmit the second signal to a first device through a first link after recovering the second signal.

According to another optional embodiment of the present application, an apparatus for controlling signal transmission is provided, including: a relay control device, where the relay control device is connected to a first device through a first link, the relay control device is a device supporting an open interconnection standard CXL protocol, and when the first device sends a first signal, the relay control device is configured to receive the first signal through the first link, and is configured to determine a link status of the first link by using the first signal; and an MCU device, where the MCU device is connected to the relay control device, and is configured to control, according to a control instruction sent by the relay control device, a signal gating device and a DSP device to transmit the first signal, where the control instruction includes the link status of the first link, and both the signal gating device and the DSP device are connected to the MCU device.

According to another optional embodiment of the present application, a system for controlling signal transmission is provided. The system for controlling signal transmission includes any one of the foregoing apparatus for controlling signal transmission es.

According to still another optional embodiment of the present application, a computer non-volatile readable storage medium is further provided. The computer non-volatile readable storage medium stores a computer program. When the computer program is set to be run, steps of any one of the foregoing method embodiments are implemented.

According to still another optional embodiment of the present application, an electronic device is further provided, including a memory and a processor. The memory stores a computer program. The processor is set to run the computer program to perform steps of any one of the foregoing method embodiments.

According to the present application, the relay control device is a device supporting the open interconnection standard CXL protocol, has a capability of recognizing, based on the received first signal sent by the first device, the status of the first link through which the first signal is transmitted, and can send the control instruction to the MCU device through communication with the MCU device, so that the MCU device enters a corresponding link state, and controls transmission of the first signal. This can implement transmission of data signals having different rates specified in the CXL protocol. Therefore, a problem that the data signal defined in the CXL protocol cannot be transmitted between devices through an optical fiber link in a related art can be solved, and an effect of transmitting the data signal defined in the CXL protocol between the devices through the optical fiber link is achieved.

### Brief Description of the Drawings

Fig. 1 is a block diagram of a hardware structure of a mobile terminal for a method for controlling signal transmission according to an embodiment of the present application;
Fig. 2 is a flowchart 1 of a method for controlling signal transmission according to an embodiment of the present application;
Fig. 3 is a flowchart of a CXL external optical interconnection transmit end according to an embodiment of the present application;
Fig. 4 is a flowchart 2 of a method for controlling signal transmission according to an embodiment of the present application;
Fig. 5 is a flowchart of a CXL external optical interconnection receive end according to an embodiment of the present application;
Fig. 6 is a block diagram of a structure of an apparatus for controlling signal transmission according to an embodiment of the present application; and
Fig. 7 is a block diagram of a system structure of a system for controlling signal transmission according to an embodiment of the present application.

### Detailed Description of the Embodiments

The following describes embodiments of the present application in detail with reference to accompanying drawings and embodiments.

It should be noted that, in the specification, claims, and accompanying drawings of the present application, the terms "first", "second", and the like are intended to distinguish between similar objects, but do not necessarily describe a specific order or sequence.

The following explains related technologies in embodiments as follows.

CXL: (Compute Express Link), an open industrial standard for a high-bandwidth and low-delay device interconnection, where the CXL may be used to connect devices such as a CPU, a GPU, a memory, and a smart network interface card.

MCU: (Micro Controller Unit) microcontroller unit, also referred to as a single-chip microcomputer, and obtained by appropriately reducing a frequency and a specification of a CPU, and integrating a memory, a counter, and the like on a single chip.

DSP: (Digital Signal Processor) digital signal processor, a processor including a large-scale or ultra-large-scale integrated circuit chip and used to complete a digital signal processing task.

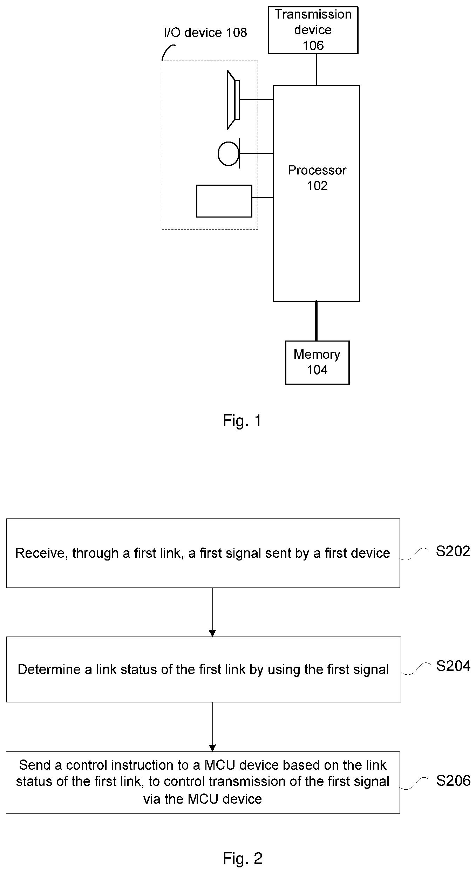

Method embodiments provided in embodiments of the present application may be performed on a mobile terminal, a computer terminal or a similar arithmetic apparatus. For example, the method embodiments are run on the mobile terminal. Fig. 1 is a block diagram of a hardware structure of the mobile terminal for a method for controlling signal transmission according to an embodiment of the present application. As shown in Fig. 1, the mobile terminal may include one or more (only one is shown in Fig. 1) processors 102 (the processor 102 may include but is not limited to a processing apparatus like a microcontroller unit (MCU) or a field programmable logic gate (FPGA) (Field Programmable Gate Array)) and a memory 104 configured to store data. The mobile terminal may further include a transmission device 106 configured for a communication function and an input-output device 108. A person of ordinary skill in the art may understand that the structure shown in Fig. 1 is merely an example, and does not constitute a limitation on the structure of the mobile terminal. For example, the mobile terminal may alternatively include more or fewer components than those shown in Fig. 1, or have a configuration different from that shown in Fig. 1.

The memory 104 may be configured to store a computer program, for example, a software program and a module of application software, for example, a computer program corresponding to a method for controlling signal transmission in embodiments of the present application. The processor 102 runs the computer program stored in the memory 104, to perform various function applications and data processing, that is, implement the method. The memory 104 may include a high-speed random access memory, and may further include a non-volatile memory, for example, one or more magnetic storage apparatuses, a flash memory, or another non-volatile solid-state memory. In some instances, the memory 104 may include memories disposed remotely relative to the processor 102. These remote memories may be connected to the mobile terminal through a network. Instances of the network include but are not limited to the internet, an intranet, a local area network, a mobile communication network, and a combination thereof.

The transmission device 106 is configured to receive or send data through a network. A specific instance of the network may include a wireless network provided by a communications provider of the mobile terminal. In an instance, the transmission device 106 includes a network interface controller (Network Interface Controller, NIC for short), and may be connected to another network device via a base station to communicate with the internet. In an instance, the transmission device 106 may be a radio frequency (Radio Frequency, RF for short) module, and is configured to communicate with the internet in a wireless manner.

In this embodiment, a method for controlling signal transmission is provided. Fig. 2 is a flowchart 1 of the method for controlling signal transmission according to this embodiment of the present application. As shown in Fig. 2, a procedure includes the following steps.

Step S202: A first signal sent by a first device is received through a first link, where the first link connects the first device to a relay control device, the relay control device is a device supporting an open interconnection standard CXL protocol, and the first signal is an electrical signal.

Step S204: A link status of the first link is determined by using the first signal.

Step S206: A control instruction is sent to a microcontroller unit (MCU) device based on the link status of the first link, to control transmission of the first signal via the MCU device, where the MCUdevice is connected to the relay control device.

An execution body of the foregoing steps may be the relay control device or the like, but is not limited thereto.

In this embodiment, the first device includes but is not limited to a CPU and a GPU, and is externally interconnected with the relay control device through the first link. The first link is an optical fiber link.

The relay control device can be a chip device supporting the open interconnection standard CXL protocol, for example, including but not limited to a switch chip (switch chip), a retimer chip (retimer chip), and a field programmable gate array (Field Programmable Gate Array, FPGA for short) chip, and is used to implement signal relay and support detection of a receive end. The CXL protocol is an interconnection protocol based on PCIe 5.0 (Peripheral Component Interconnect Express 5.0, a computer bus high-speed data transmission standard). In a normal working state, a data signal transmission rate is 32 Gbps (Gigabits per second, gigabits per second)/lane (lane). A process like link training exists in a process in which devices establish a connection using the CXL interconnection protocol. Benefiting from the feature of the CXL protocol, the CXL protocol is quite applicable to building a resource pool platform, to provide a high-speed and low-delay data transmission lane for an independent resource device. Due to a large link loss in an external copper high-speed interconnection solution, in the prior art, only a meter-level interconnection can be implemented in a working condition of a standard rate of 32 Gbps/lane in the CXL protocol. As a result, space of a resource pool and an advantage of an external interconnection in the CXL protocol are greatly limited. However, a loss of the optical fiber link is much less than a loss of a copper link. In a CXL external interconnection solution based on an optical fiber technology, long-distance and high-rate data transmission can be implemented, a physical boundary of the resource pool mightbe effectively extended, and the advantage of the external interconnection in the CXL protocol might be fully used. A data signal defined in the CXL protocol can also be transmitted between a host like a server and a device like the resource pool through the optical fiber link, without setting a corresponding link state between the CPU and the device in advance. An external long-distance interconnection of the high-rate signal defined in the CXL protocol can be implemented. In this embodiment, three link states are further defined based on CXL link transmission and training processes, and a DSP device and a data signal gating device are configured via the MCU device to implement transmission of different types of data signals.

In this embodiment, when the first device sends the first signal through the first link, the relay control device transmits information about a current link state of the first link to the MCU device using the control instruction. The MCU device can control the DSP device and the signal gating device to enter corresponding states. In this way, the first signal transmitted by the relay control device is transmitted to an optical transmitter for electro-optic conversion, and a converted signal is finally transmitted outward through an optical fiber.

Through the foregoing steps, the relay control device is a device supporting the open interconnection standard CXL protocol, has a capability of recognizing, based on the received first signal sent by the first device, the status of the first link through which the first signal is transmitted, and can send the control instruction to the MCU device through communication with the MCU device, so that the MCU device enters a corresponding link state, and controls transmission of the first signal. This can implement transmission of data signals having different rates specified in the CXL protocol. Therefore, a problem that the data signal defined in the CXL protocol cannot be transmitted between devices through the optical fiber link in a related art mightbe solved, and an effect of transmitting the data signal defined in the CXL protocol between the devices through the optical fiber link is achieved.

In an example embodiment, that a link status of the first link is determined by using the first signal includes: When a signal transmission rate of the first signal is less than a first preset rate, it is determined that the first link is in a link training state, where the first preset rate is set based on the standard rate in the CXL protocol. In this embodiment, the standard rate in the CXL protocol is 32 Gbps/lane. The first preset rate may be the same as the standard rate in the CXL protocol, or may be less than 32 Gbps/lane. For example, when the transmission rate of the first signal is less than 32 Gbps/lane, it is determined that the first link is in the link training state, and the relay control device controls the MCU device to enter a state of controlling the signal gating device. Details are as follows.

That a control instruction is sent to a microcontroller unit (MCU) device based on the link status of the first link, to control transmission of the first signal via the MCU device includes: A first control instruction is sent to the MCU device, to control the signal gating device via the MCU device to receive the first signal from the relay control device, and to control the signal gating device to transmit the first signal to the optical transmitter, where the first control instruction includes information that the first link is in the link training state. In this embodiment, the signal gating device can be a data signal gating chip, including but not limited to an ASIC (Application-Specific Integrated Circuit, application-specific integrated circuit) chip, an ARM (Advanced RISC Machine, advanced reduced instruction set computer machine) chip, an FPGA (Field Programmable Gate Array, field programmable gate array) chip, or the like, is used to implement signal gating, and supports a signal rate covering the signal rate specified in the CXL protocol. The MCU device can control the signal gating device to transmit a data signal transmitted directly via the relay control device. When the first link is in the link training state, the data signals further have four rates: 2.5 Gbps, 5 Gbps, 8 Gbps, and 16 Gbps. Generally, the DSP device used in the optical fiber link or an optical module is mainly designed for a high-bandwidth signal, and is difficult to support a low-rate signal in the link training process. In addition, duration required by the DSP device to perform rate switching is approximately at a level of 100 ms (milliseconds) or s (second). As a result, a great delay is generated. Consequently, the DSP device is generally set to process a constant-rate signal, without performing rate switching. Signals having the four rates of 2.5 Gbps, 5 Gbps, 8 Gbps, and 16 Gbps can ensure signal transmission quality without being shaped and recovered by the DSP device. Therefore, the data signal during link training is directly transmitted to the optical transmitter via the signal gating device without being shaped and recovered by the DSP device.

In this embodiment, when the first link is in the link training state, the MCU device is controlled to control the signal gating device to directly transmit the first signal, so that a low-rate data signal is directly transmitted to an optical receiver without passing through the DSP device. This implements normal transmission of the low-rate data signal in the overall link training process.

In an example embodiment, that a link status of the first link is determined by using the first signal includes: When a signal transmission rate of the first signal is equal to a first preset rate, it is determined that the first link is in a signal transmission state, where the first preset rate is set based on the standard rate in the CXL protocol. In this embodiment, for example, when the transmission rate of the first signal is equal to 32 Gbps/lane, it is determined that the first link is in the normal signal transmission state, and the relay control device controls the MCU to enter a state of controlling the DSP device for normal signal transmission. Details are as follows.

That a control instruction is sent to a microcontroller unit (MCU) device based on the link status of the first link, to control transmission of the first signal via the MCU device includes: A second control instruction is sent to the MCU device, to control the DSP device via the MCU device to receive the first signal from the relay control device, and to control the DSP device to process the first signal, so as to obtain a first processed signal; and the signal gating device is controlled via the MCU device to receive the processed signal from the DSP device, and the signal gating device is controlled to transmit the first processed signal to an optical transmitter, where the second control instruction includes information that the first link is in the signal transmission state. In this embodiment, a rate of a data signal processed by the DSP device is set to 32 Gbps, and corresponds to the standard rate in the CXL protocol. The DSP device needs to transmit the transmitted first signal to the signal gating device after shaping and recovering the transmitted first signal.

In this embodiment, the DSP device shapes and recovers the first signal, to implement normal transmission of the data signal on the entire link.

In an example embodiment, that a link status of the first link is determined by using the first signal includes: When a signal amplitude of the first signal is less than a first preset amplitude, it is determined that the first link is in an idle state, where the first preset amplitude is set based on a standard amplitude in the CXL protocol. In this embodiment, the first preset amplitude may be an amplitude required in the CXL protocol. For example, the first preset amplitude is 20 mV (millivolts). If the signal amplitude of the first signal is less than 20 mV, the first link is in the idle state, and the relay control device controls the MCU device to enter a state of controlling the DSP device. Details are as follows.

That a control instruction is sent to a microcontroller unit (MCU) device based on the link status of the first link, to control transmission of the first signal via the MCU device includes: A third control instruction is sent to the MCU device, to control the DSP device via the MCU device to receive the first signal from the relay control device, and to control the DSP device to perform noise suppression on the first signal, so as to obtain a second processed signal; and the signal gating device is controlled via the MCU device to receive the second processed signal from the DSP device, and the signal gating device is controlled to transmit the second processed signal to the optical transmitter, where the third control instruction includes information that the first link is in the idle state. In this embodiment, the MCU device controls the DSP device to be in a noise suppression state. The MCU device controls the signal gating device to transmit a low-noise signal suppressed by the DSP device, to avoid the receive end recognizing a low-amplitude noise signal as a normal signal.

In this embodiment, the entire first link enters the idle state in the link training process and when no data is transmitted. In this case, the low-amplitude (less than 20 mV) noise signal is still generated. The low-amplitude noise signal is made to pass through the DSP device, and then is transmitted via the signal gating device after noise is suppressed by an internal digital circuit of the DSP device. This mightreduce a probability that an optical interconnection device at the receive end recognizes the noise signal as a normal data signal.

In an example embodiment, the method further includes: The first signal is transmitted to the optical transmitter via the signal gating device; optical signal conversion is performed on the first signal via the optical transmitter, to obtain a first optical signal; and the first optical signal is transmitted to a second device via the optical transmitter. In this embodiment, the optical transmitter can be connected to an optical receiver in the second device. The electrical signal is transmitted to the optical receiver through the optical fiber after being photoelectrically converted into the optical signal. This implements signal transmission.

In an example embodiment, the method further includes: A second signal sent by the signal gating device is received, where the second signal is an electrical signal; the second signal is recovered, to obtain a recovered signal; and the recovered signal is sent to the first device through the first link. In this embodiment, when an optical receiver receives the signal through the optical fiber link, the MCU device enters a corresponding state with reference to the input signal and a register value identifying the current data link state in the relay control device. In this way, an electrical signal photoelectrically converted by the optical receiver is transmitted to the relay control device through the DSP device and the signal gating device, and finally transmitted to the first device through a first link. This implements signal receiving.

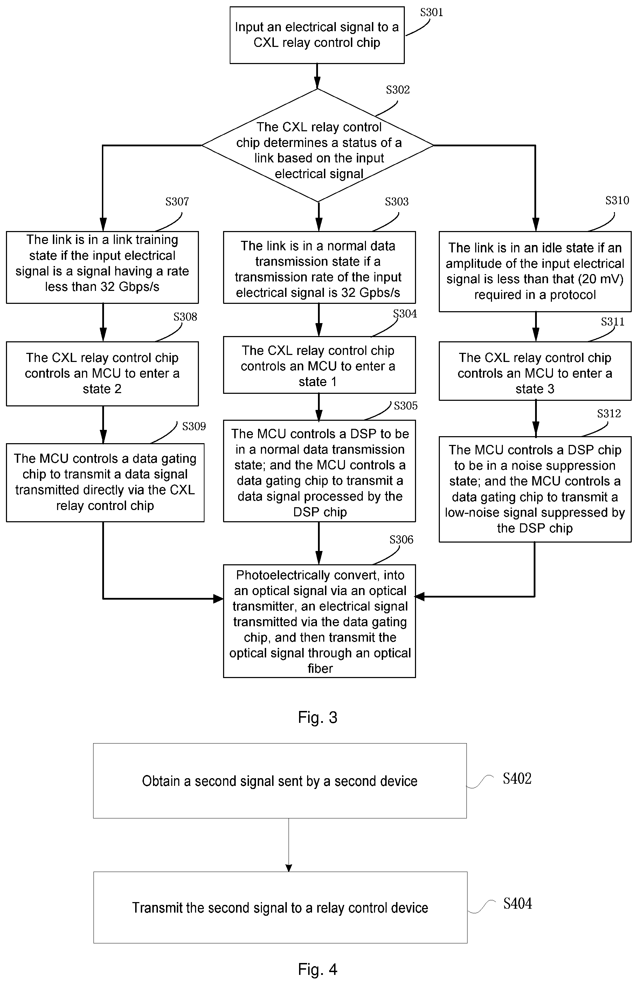

The following describes this embodiment in detail with reference to Fig. 3. Fig. 3 is a flowchart of a CXL external optical interconnection transmit end according to this embodiment. The following steps are specifically included.

S301: An electrical signal (corresponding to the first signal in the foregoing descriptions) is input to a CXL relay control device (corresponding to the relay control device in the foregoing descriptions).

S302: The CXL relay control device determines a status of a link (corresponding to the first link in the foregoing descriptions) based on the input electrical signal.

S303: The link is in a normal data transmission state if a transmission rate of the input electrical signal is 32 Gpbs/s.

S304: The CXL relay control device controls an MCU (corresponding to the MCU device in the foregoing descriptions) to enter a state 1.

S305: The MCU controls a DSP (corresponding to the DSP device in the foregoing descriptions) to be in a normal data transmission state, and the MCU controls a data gating chip (corresponding to the signal gating device in the foregoing descriptions) to transmit a data signal processed by the DSP chip.

S307: The link is in a link training state if the input electrical signal is a signal having a rate less than 32 Gbps/s.

S308: The CXL relay control device controls an MCU to enter a state 2.

S309: The MCU controls a data gating chip to transmit a data signal transmitted directly via the CXL relay control device.

S310: The link is in an idle state if an amplitude of the input electrical signal is less than that (20 mV) required in a protocol.

S311: The CXL relay control device controls an MCU to enter a state 3.

S312: The MCU controls a DSP chip to be in a noise suppression state, and the MCU controls a data gating chip to transmit a low-noise signal suppressed by the DSP chip, to avoid a receive end recognizing a low-amplitude noise signal as a normal signal.

S306: An electrical signal transmitted via the data gating chip is photoelectrically converted into an optical signal via an optical transmitter, and then the optical signal is transmitted through an optical fiber.

In this embodiment, a method for controlling signal transmission is provided. Fig. 4 is a flowchart 2 of the method for controlling signal transmission according to this embodiment of the present application. As shown in Fig. 4, a procedure includes the following steps.

Step S402: A second signal sent by a second device is obtained, where the second signal is obtained by performing electrical signal conversion on a received optical signal by an optical receiver, and the optical signal is sent by the second device.

Step S404: The second signal is transmitted to a relay control device, where the relay control device is a device supporting an open interconnection standard CXL protocol, and the relay control device is configured to transmit the second signal to a first device through a first link after recovering the second signal.

An execution body of the foregoing steps may be an MCU device or the like, but is not limited thereto.

In this embodiment, the second device includes but is not limited to a CPU and a GPU. The second device and the first device are both external devices, and are connected to the relay control device through links. It should be noted that each of the first device and the second device is connected to a relay control device. The relay control device can be a chip device supporting the open interconnection standard CXL protocol, for example, including but not limited to a switch chip, a retimer chip, and an FPGA, and is used to implement signal relay and support detection of a receive end. The CXL protocol is an interconnection protocol based on PCIe 5.0. In a normal working state, a data signal transmission rate is 32 Gbps/lane. A process like link training exists in a process in which devices establish a connection using the CXL interconnection protocol. Benefiting from the feature of the CXL protocol, the CXL protocol is quite applicable to building a resource pool platform, to provide a high-speed and low-delay data transmission lane for an independent resource device. Due to a large link loss in an external copper high-speed interconnection solution, in the prior art, only a meter-level interconnection can be implemented in a working condition of a standard rate of 32 Gbps/lane in the CXL protocol. As a result, space of a resource pool and an advantage of an external interconnection in the CXL protocol are greatly limited. However, a loss of the optical fiber link is much less than a loss of a copper link. In a CXL external interconnection solution based on an optical fiber technology, long-distance and high-rate data transmission can be implemented, a physical boundary of the resource pool mightbe effectively extended, and the advantage of the external interconnection in the CXL protocol mightbe fully used. A data signal defined in the CXL protocol can also be transmitted between a host like a server and a device like the resource pool through the optical fiber link, without setting a corresponding link state between the CPU and the device in advance. An external long-distance interconnection of the high-rate signal defined in the CXL protocol can be implemented. In this embodiment, three link states are further defined based on CXL link transmission and training processes, and a DSP device and a data signal gating device are configured via the MCU device to implement transmission of different types of data signals.

In this embodiment, when the optical receiver receives the second signal through the optical fiber link, the MCU device enters a corresponding state with reference to the second signal and a register value identifying a current data link state in the relay control device. In this way, an electrical signal photoelectrically converted by the optical receiver is transmitted to the relay control device through the DSP device and the signal gating device, and finally transmitted to the first device through the first link.

Through the foregoing steps, the MCU device obtains the second signal sent by the second device. The second signal is obtained by performing electrical signal conversion on the received optical signal by the optical receiver, and the optical signal is sent by the second device. The second signal is transmitted to the relay control device, where the relay control device is a device supporting the open interconnection standard CXL protocol, and the relay control device is configured to transmit the second signal to the first device through the first link after recovering the second signal. The MCU can enter a corresponding link state, and control transmission of the second signal. This can implement transmission of data signals having different rates specified in the CXL protocol. Therefore, a problem that the data signal defined in the CXL protocol cannot be transmitted between the devices through the optical fiber link in a related art mightbe solved, and an effect of transmitting the data signal defined in the CXL protocol between the devices through the optical fiber link is achieved.

In an example embodiment, that a second signal sent by a second device is obtained includes: The second signal is obtained from the DSP device or the signal gating device, wherein the second signal is a signal transmitted by the optical receiver to the DSP device and the signal gating device. In this embodiment, the signal gating device can be a data signal gating chip, including but not limited to an ASIC chip, an ARM chip, an FPGA chip, or the like, is used to implement signal gating, supports a signal rate covering the signal rate specified in the CXL protocol. The optical receiver is connected to both the DSP device and the signal gating device, and transmits the second signal to the DSP device and the signal gating device. Both the DSP device and the signal gating device are connected to the MCU device. In this way, the MCU device can obtain the second signal from the DSP device or the signal gating device, and determine the second signal.

In an example embodiment, that the second signal is transmitted to a relay control device includes: When a signal amplitude of the second signal is less than or equal to a second preset amplitude, a third control instruction is sent to the DSP device, to control the DSP device to perform noise suppression on the second signal, so as to obtain a noise-suppressed signal; and a fourth control instruction is sent to the signal gating device, to control the signal gating device to transmit the noise-suppressed signal to the relay control device. In this embodiment, the second preset amplitude can be an amplitude of a low-noise signal. When the signal amplitude of the second signal is less than or equal to the amplitude of the low-noise signal, the MCU device maintains a state of controlling the DSP device, and the MCU device controls the signal gating device to transmit a low-noise signal suppressed by the DSP device. This mightensure normal signal transmission.

In an example embodiment, that the second signal is transmitted to a relay control device includes: When a signal amplitude of the second signal is greater than a second preset amplitude, whether the second signal includes a character sequence and a register value is determined, where the character sequence is used to identify that a second link is in a link training state, and the register value is used to identify a current link state of the second link; when the second signal includes the character sequence and the register value, and the signal amplitude of the second signal is less than or equal to the second preset amplitude, a fifth control instruction is sent to the DSP device, to control the DSP device to perform noise suppression on the second signal, so as to obtain a noise-suppressed signal; and a sixth control instruction is sent to the signal gating device, to control the signal gating device to transmit the noise-suppressed signal to the relay control device. In this embodiment, when the signal amplitude of the second signal is greater than an amplitude of a low-noise signal, the MCU device exits a state of controlling the DSP device, and the MCU device performs state determining based on whether the character sequence representing link training and the register value identifying the current link state in the relay control device exist in the second signal.

In an example embodiment, that the second signal is transmitted to a relay control device includes: When the second signal includes a character sequence and a register value is a preset register value, a seventh control instruction is sent to the DSP device, to control the DSP device to perform noise suppression on the second signal, so as to obtain a noise-suppressed signal, where the character sequence is used to identify that a second link is in a link training state, and the register value is used to identify a current link state of the second link; and an eighth control instruction is sent to the signal gating device, to control the signal gating device to transmit the noise-suppressed signal to the relay control device. In this embodiment, when the character sequence representing link training does not exist or the character sequence representing the link training state exists in the second signal, but a register representing a current link rate in the relay control device corresponds to 16 Gbps, the MCU device enters a state of controlling the DSP device. The MCU device controls the DSP device to be in a normal data transmission state, and the MCU device controls the signal gating device to transmit the data signal processed by the DSP device. This can implement normal transmission of the data signal on the entire link.

In an example embodiment, the method further includes: A first control instruction sent by the relay control device is received through the first link, where the first control instruction includes information that the first link is in a link training state, and the first link connects the first device to the relay control device; and the first control instruction is responded to, to control the signal gating device to receive a first signal from the relay control device, and to control the signal gating device to transmit the first signal to an optical transmitter, where the first signal is an electrical signal received by the relay control device from the first device through the first link. In this embodiment, when the first link is in the link training state, the data signals further have four rates: 2.5 Gbps, 5 Gbps, 8 Gbps, and 16 Gbps. Generally, the DSP device used in the optical fiber link or an optical module is mainly designed for a high-bandwidth signal, and is difficult to support a low-rate signal in the link training process. In addition, duration required by the DSP device to perform rate switching is approximately at a level of 100 ms or s. As a result, a great delay is generated. Consequently, the DSP device is generally set to process a constant-rate signal, without performing rate switching. Signals having the four rates of 2.5 Gbps, 5 Gbps, 8 Gbps, and 16 Gbps can ensure signal transmission quality without being shaped and recovered by the DSP device. Therefore, the data signal during link training is directly transmitted to the optical transmitter via the signal gating device without being shaped and recovered by the DSP device. In this embodiment, when the first link is in the link training state, the MCU device is controlled to control the signal gating device to directly transmit the first signal, so that a low-rate data signal is directly transmitted to an optical receiver without passing through the DSP device. This implements normal transmission of the low-rate data signal in the overall link training process.

In an example embodiment, the method further includes: A second control instruction sent by the relay control device is received through the first link, where the second control instruction includes information that the first link is in a signal transmission state, and the first link connects the first device to the relay control device; and the second control instruction is responded to, to control the DSP device to receive a first signal from the relay control device, to control the DSP device to process the first signal, so as to obtain a first processed signal, and to control the signal gating device to transmit the first processed signal to an optical transmitter. In this embodiment, a rate of a data signal processed by the DSP device is set to 32 Gbps, and corresponds to the standard rate in the CXL protocol. The DSP device needs to transmit the transmitted first signal to the signal gating device after shaping and recovering the transmitted first signal. In this embodiment, the DSP device shapes and recovers the first signal, to implement normal transmission of the data signal on the entire link.

In an example embodiment, the method further includes: A third control instruction sent by the relay control device is received through the first link, where the third control instruction comprises information that the first link is in an idle state, and the first link connects the first device to the relay control device; and the third control instruction is responded to, to control the DSP device to receive the first signal from the relay control device, to control the DSP device to perform noise suppression on the first signal, so as to obtain a second processed signal, and to control the signal gating device to receive the second processed signal from the DSP device and then transmit the second processed signal to an optical transmitter. In this embodiment, the MCU device controls the DSP device to be in a noise suppression state. The MCU device controls the signal gating device to transmit a low-noise signal suppressed by the DSP device, to avoid the receive end recognizing a low-amplitude noise signal as a normal signal. In this embodiment, the entire first link enters the idle state in the link training process and when no data is transmitted. In this case, the low-amplitude (less than 20 mV) noise signal is still generated. The low-amplitude noise signal is made to pass through the DSP device, and then is transmitted via the signal gating device after noise is suppressed by an internal digital circuit of the DSP device. This mightreduce a probability that an optical interconnection device at the receive end recognizes the noise signal as a normal data signal.

In an example embodiment, the method further includes: Optical signal conversion is performed via the optical transmitter on a signal received from the signal gating device, and a converted optical signal is transmitted to the second device. This implements signal sending.

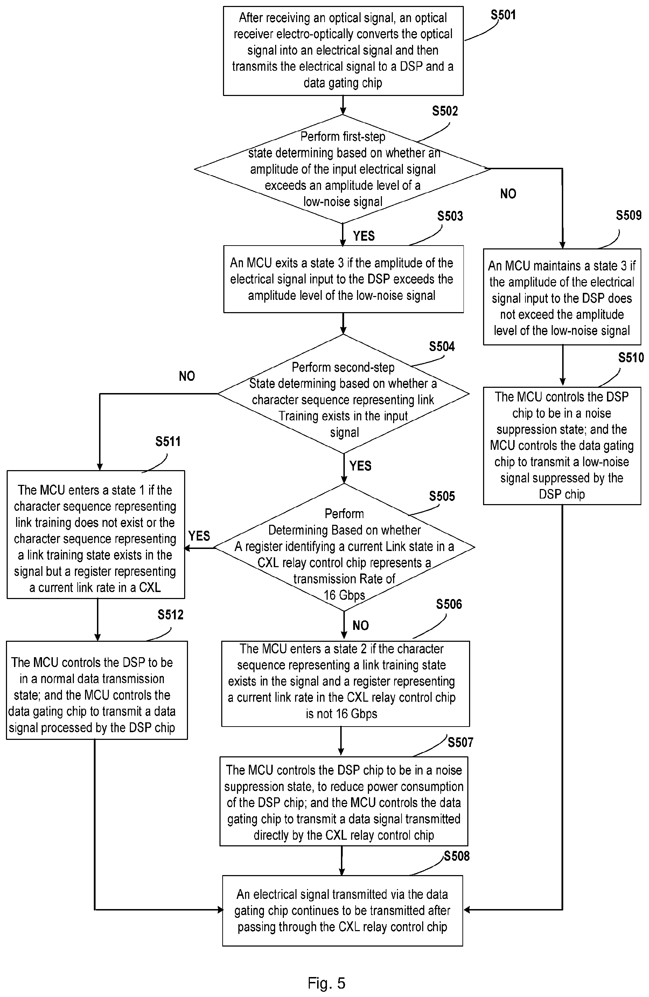

The following describes this embodiment in detail with reference to Fig. 5. Fig. 5 is a flowchart of a CXL external optical interconnection receive end according to this embodiment. The following steps are specifically included.

S501: After receiving an optical signal, an optical receiver electro-optically converts the optical signal into an electrical signal (corresponding to the second signal in the foregoing descriptions) and then transmits the electrical signal to a DSP and a data gating chip.

S502: State determining is performed based on whether an amplitude of the input electrical signal exceeds an amplitude level of a low-noise signal.

S503: An MCU exits a state 3 (the state 3 includes controlling the data gating chip to transmit a low-noise signal suppressed by the DSP) if the amplitude of the electrical signal input to the DSP exceeds the amplitude level of the low-noise signal.

S504: State determining in S505 is performed based on whether a character sequence representing link training and a register value identifying a current link state in a CXL relay control device exist in the input signal.

S505 and S506: The MCU enters a state 2 if the character sequence representing a link training state exists in the signal and a register representing a current link rate in the CXL relay control device is not 16 Gbps; and the MCU controls the DSP chip to be in a noise suppression state, to reduce power consumption of the DSP chip.

S507: The MCU controls the data gating chip to transmit a data signal transmitted directly via the CXL relay control device.

S508: An electrical signal transmitted via the data gating chip continues to be transmitted after passing through the CXL relay control device.

S509: An MCU maintains a state 3 if the amplitude of the electrical signal input to the DSP does not exceed the amplitude level of the low-noise signal.

S510: The MCU controls the DSP chip to be in a noise suppression state, and the MCU controls the data gating chip to transmit a low-noise signal suppressed by the DSP chip.

S511: The MCU enters a state 1 if the character sequence representing link training does not exist or the character sequence representing a link training state exists in the signal but a register representing a current link rate in the CXL relay control device corresponds to 16 Gbps.

S512: The MCU controls the DSP to be in a normal data transmission state, and the MCU controls the data gating chip to transmit a data signal processed by the DSP chip.

In this embodiment, after initial power-on and reset, the MCU controls the DSP and the data signal gating chip to enter the state 3. In this case, the link is in an idle state, and only has a low-amplitude noise signal. When link training starts or a normal-rate signal is transmitted, the state 3 is exited, and whether to enter the state 1 or the state 2 is determined based on specified logic.

Through the descriptions of the foregoing implementations, a person skilled in the art may clearly understand that the methods according to the foregoing embodiments may be implemented by using software in addition to a necessary general-purpose hardware platform. Certainly, the methods may alternatively be implemented by using hardware. However, in many cases, the former is a better implementation. Based on such an understanding, the technical solutions of the present application essentially or the part contributing to the prior art may be implemented in a form of a software product. The software product is stored in a non-volatile readable storage medium (for example, a ROM (Read-Only Memory, read-only memory)/RAM (Random Access Memory, random access memory), a magnetic disk, or an optical disc), and includes several instructions for instructing a terminal device (which may be a mobile phone, a computer, a server, a network device, or the like) to perform the methods described in embodiments of the present application.

In this embodiment, an apparatus for controlling signal transmission is further provided.

The apparatus is configured to implement the foregoing embodiments and optional implementations. Details are not described again for those that are already described. As used in the following, the term "module" may be a combination of software and/or hardware that implements a predetermined function. Although the apparatus described in the following embodiment is preferably implemented by software, an implementation by hardware or a combination of software and hardware is also possible and conceived.

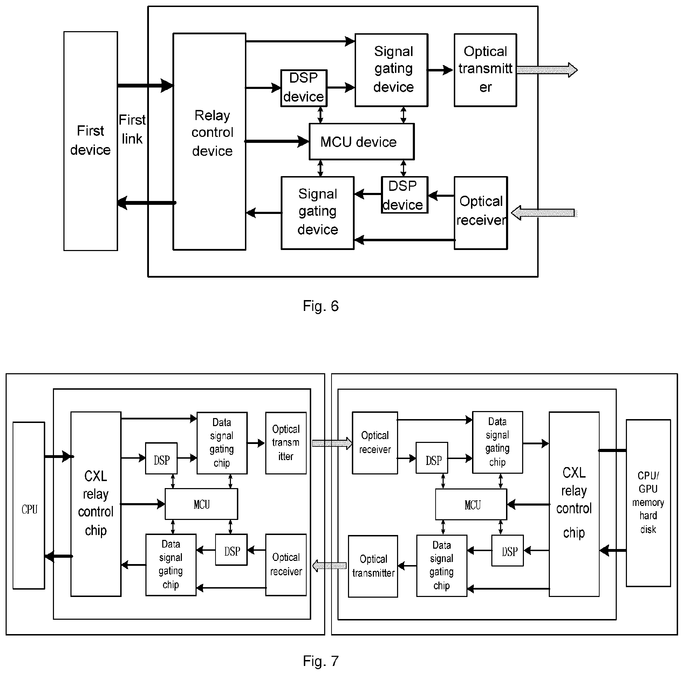

Fig. 6 is a block diagram of a structure of an apparatus for controlling signal transmission according to an embodiment of the present application. As shown in Fig. 6, the apparatus includes:
a relay control device, where the relay control device is connected to a first device through a first link, the relay control device is a device supporting an open interconnection standard CXL protocol, and when the first device sends a first signal, the relay control device is configured to receive the first signal through the first link, and is configured to determine a link status of the first link by using the first signal; and
an MCU device, where the MCU device is connected to the relay control device, and is configured to control, according to a control instruction sent by the relay control device, a signal gating device and a DSP device to transmit the first signal, wherein the control instruction includes the link status of the first link, and both the signal gating device and the DSP device are connected to the MCU device.

In an example embodiment, the apparatus further includes an optical transmitter. The optical transmitter is connected to the signal gating device, is configured to receive the first signal sent by the signal gating device, is configured to perform optical signal conversion on the first signal, to obtain a first optical signal, and is configured to transmit the first optical signal to a second device.

In an example embodiment, the apparatus further includes an optical receiver. The optical receiver is connected to a second device, is configured to perform electrical signal conversion on an optical signal received from the second device, to obtain a second signal, and is configured to send the second signal to the DSP device and the signal gating device.

In an example embodiment, the MCU device is further configured to: obtain the second signal from the DSP device or the signal gating device, and transmit the second signal to the relay control device via the DSP device and the signal gating device. The DSP device is configured to process the second signal according to a control instruction sent by the MCU device. The signal gating device is configured to send a processed second signal to the relay control device according to a control instruction sent by the MCU device.

In this embodiment, as shown in Fig. 6, the relay control device, the MCU device, the DSP device, the signal gating device, the optical transmitter, and the optical receiver are all disposed on a PCB (Printed Circuit Board, printed circuit board). The PCB may be a board card connected to a server motherboard or a resource pool base board through a gold finger or a wire, or may be a server motherboard or a resource pool base board body, and is used to install the devices and the components shown in this embodiment and provide an electrical link. The relay control device, the MCU device, the DSP device, the signal gating device, the optical transmitter, and the optical receiver may be in forms of pluggable optical modules, or may be in forms of onboard optical modules, or may be in a form of a co-packaged optical module on a same PCB as the relay control device, and are used to implement signal gating and photoelectric or electro-optical conversion.

Optionally, the first device includes but is not limited to a CPU and a GPU, and is externally interconnected with the relay control device through the first link. The first link is an optical fiber link. The relay control device can be a chip device supporting the open interconnection standard CXL protocol, for example, including but not limited to a switch chip, a retimer chip, and an FPGA, and is used to implement signal relay and support detection of a receive end. The signal gating device can be a data signal gating chip, including but not limited to an ASIC chip, an ARM chip, an FPGA chip, or the like, is used to implement signal gating, and supports a signal rate covering a signal rate specified in the CXL protocol. The MCU device can control the signal gating device to transmit a data signal transmitted directly via the relay control device. It should be noted that there may be one or more DSP devices, one or more signal gating devices, one MCU device, one optical receiver, and one optical transmitter.

Optionally, when the first device sends the first signal through the first link, the relay control device transmits information about a current state of the first link to the MCU device. The MCU device controls the DSP device and the signal gating device to enter corresponding states. In this way, the signal transmitted by the relay control device is transmitted to the optical transmitter for electro-optic conversion, and a converted signal is finally transmitted outward through an optical fiber.

Optionally, when the signal is received through the optical fiber link, the MCU device enters a corresponding state with reference to the input second signal and a register value identifying the current data link state in the relay control device. In this way, an electrical signal photoelectrically converted by the optical receiver is transmitted to the CXL relay control device through the DSP device and the signal gating device, and finally transmitted to the first device through the electrical link.

According to the foregoing apparatus, the relay control device is a device supporting the open interconnection standard CXL protocol, has a capability of recognizing, based on the received first signal sent by the first device, the status of the first link through which the first signal is transmitted, and can send the control instruction to the MCU device through communication with the MCU device, so that the MCU device enters a corresponding link state, and controls transmission of the first signal. This can implement transmission of data signals having different rates specified in the CXL protocol. Therefore, a problem that the data signal defined in the CXL protocol cannot be transmitted between devices through the optical fiber link in a related art mightbe solved, and an effect of transmitting the data signal defined in the CXL protocol between the devices through the optical fiber link is achieved.

An embodiment of the present application further provides a system for controlling signal transmission . The system for controlling signal transmission includes the foregoing apparatus for controlling signal transmission . In this embodiment, the system for controlling signal transmission is described in a manner of a specific embodiment. Fig. 7 is a block diagram of a system structure of the system for controlling signal transmission according to this embodiment. The system includes a device for signal transmission between two apparatus for controlling signal transmission es. For example, a first device is a CPU, a second device is a CPU/GPU memory hard disk, a relay control device is a CXL relay control device, a signal gating device is a data signal gating chip, an MCU device is an MCU, and a DSP device is a DSP. A specific interaction process includes the following.

The CPU transmits an electrical signal to the CXL relay control device through a first link. The CXL relay control device determines a status of the first link based on the input electrical signal. The link is in a normal data transmission state if a transmission rate of the input electrical signal is 32 Gpbs/s. The CXL relay control device controls the MCU to enter a state 1. The MCU controls the DSP to be in a normal data transmission state. The MCU controls the data gating chip to transmit a data signal processed by the DSP chip. The link is in a link training state if the input electrical signal is a signal having a rate less than 32 Gbps/s. The CXL relay control device controls the MCU to enter a state 2. The MCU controls the data gating chip to transmit a data signal transmitted directly via the CXL relay control device. The link is in an idle state if an amplitude of the input electrical signal is less than that (20 mV) required in a protocol. The CXL relay control device controls the MCU to enter a state 3. The MCU controls the DSP chip to be in a noise suppression state. The MCU controls the data gating chip to transmit a low-noise signal suppressed by the DSP chip, to avoid a receive end recognizing a low-amplitude noise signal as a normal signal. An electrical signal transmitted via the data gating chip is photoelectrically converted into an optical signal via an optical transmitter, and then the optical signal is transmitted, through an optical fiber, to an optical receiver corresponding to the CPU/GPU memory hard disk. The optical receiver converts the optical signal into an electrical signal and transmits the electrical signal to the DSP and the data signal gating chip. The MCU obtains the electrical signal from the DSP or the data signal gating chip, and performs state determining based on whether an amplitude of the input electrical signal exceeds an amplitude level of a low-noise signal. The MCU exits the state 3 if the amplitude of the electrical signal input to the DSP exceeds the amplitude level of the low-noise signal. State determining is performed based on whether a character sequence representing link training and a register value identifying a current link state in the CXL relay control device exist in the input signal. The MCU enters the state 2 if the character sequence representing the link training state exists in the signal and a register representing a current link rate in the CXL relay control device is not 16 Gbps. The MCU controls the DSP chip to be in a noise suppression state, to reduce power consumption of the DSP chip. The MCU maintains the state 3 if the amplitude of the electrical signal input to the DSP does not exceed the amplitude level of the low-noise signal. The MCU controls the DSP chip to be in the noise suppression state. The MCU controls the data gating chip to transmit a low-noise signal suppressed by the DSP chip. The MCU enters the state 1 if the character sequence representing link training does not exist or the character sequence representing the link training state exists in the signal but the register representing the current link rate in the CXL relay control device corresponds to 16 Gbps. The MCU controls the DSP to be in the normal data transmission state. The MCU controls the data gating chip to transmit a data signal processed by the DSP chip.

In conclusion, in this embodiment, the data signal gating chip matches the DSP chip, to transmit data signals having different rates specified in the CXL protocol, and to suppress the low-amplitude noise signal existing when a link is in the idle state. Three data link states are defined, to perform control adaption on the DSP chip and the data signal gating chip via the MCU. According to the apparatus, an advantage and a capability of the DSP digital chip in transmission of a high-rate signal and suppression of the low-amplitude noise signal mightbe fully used. Transmission of a low-rate data signal beyond a bandwidth of the DSP chip is also implemented via the data signal gating chip. In addition, a CXL external optical interconnection can be implemented, an external transmission distance in the CXL protocol can be effectively extended, and an integration form is flexible. Transmission of high-rate and low-rate signals on the link in the CXL protocol can be implemented, and suppression of the low-amplitude noise signal can be implemented, to reduce a misrecognition probability of the receive end. In this solution, the integration form is flexible, is convenient to expand, and is conducive to an external interconnection between devices.

It should be noted that the foregoing modules may be implemented by software or hardware, and the latter may be implemented in the following manner, but is not limited thereto: the foregoing modules are all located in a same processor, or the foregoing modules are separately located in different processors in a form of a random combinations.

An embodiment of the present application further provides a computer non-volatile readable storage medium. The computer non-volatile readable storage medium stores a computer program. When the computer program is set to be run, steps of any one of the foregoing method embodiments are implemented.

In an example embodiment, the computer non-volatile readable storage medium may include but is not limited to any non-volatile readable storage medium that can store the computer program, for example, a USB flash drive, a read-only memory (Read-Only Memory, ROM for short), a random access memory (Random Access Memory, RAM for short), a removable hard disk, a magnetic disk, or an optical disc.

An embodiment of the present application further provides an electronic device, including a memory and a processor. The memory stores a computer program. The processor is set to run the computer program to perform steps of any one of the foregoing method embodiments.

In an example embodiment, the electronic device may further include a transmission device and an input-output device. The transmission device is connected to the processor. The input-output device is connected to the processor.

For a specific example in this embodiment, refer to the examples described in the foregoing embodiments and example implementations. In this embodiment, details are not described herein again.

It is clear that a person skilled in the art should understand that the foregoing modules or steps in the present application may be implemented by using a general-purpose computing apparatus. The foregoing modules or steps may be centralized on a single computing apparatus, or distributed on a network including a plurality of computing apparatuses. The foregoing modules or steps may be implemented by using program code executable by the computing apparatus. Therefore, the foregoing modules or steps may be stored in a storage apparatus and performed by the computing apparatus. In addition, in some cases, the shown or described steps may be performed in an order difference from that described herein. Alternatively, the foregoing modules or steps may be respectively made into individual integrated circuit modules, or a plurality of modules or steps in the foregoing modules or steps may be made into a single integrated circuit module for implementation. In this way, the present application is not limited to any particular combination of hardware and software.

The foregoing descriptions are merely optional embodiments of the present application, and are not intended to limit the present application. For a person skilled in the art, various changes and variations may be made to the present application. Any modification, equivalent replacement, improvement, or the like made without departing from the principle of the present application shall fall within the protection scope of the present application.

## Claims

1. A method for controlling signal transmission , applied to a relay control device, and comprising:
receiving, through a first link, a first signal sent by a first device, wherein the first link connects the first device to the relay control device, the relay control device is a device supporting an open interconnection standard Computer Express Link (CXL) protocol, and the first signal is an electrical signal;
determining a link status of the first link by using the first signal; and
sending a control instruction to a microcontroller unit (MCU) device based on the link status of the first link, to control transmission of the first signal via the MCU device, wherein the MCU device is connected to the relay control device.

2. The method according to claim 1, wherein the determining a link status of the first link by using the first signal comprises:
in response to a signal transmission rate of the first signal being less than a first preset rate, determining that the first link is in a link training state, wherein the first preset rate is set based on a standard rate in the CXL protocol.

3. The method according to claim 2, wherein the sending a control instruction to a microcontroller unit (MCU) device based on the link status of the first link, to control transmission of the first signal via the MCU device comprises:
sending a first control instruction to the MCU device, to control a signal gating device via the MCU device to receive the first signal from the relay control device, and to control the signal gating device to transmit the first signal to an optical transmitter, wherein the first control instruction comprises information that the first link is in the link training state.

4. The method according to claim 1, wherein the determining a link status of the first link by using the first signal comprises:
in response to a signal transmission rate of the first signal being equal to a first preset rate, determining that the first link is in a signal transmission state, wherein the first preset rate is set based on a standard rate in the CXL protocol.

5. The method according to claim 4, wherein the sending a control instruction to a microcontroller unit (MCU) device based on the link status of the first link, to control transmission of the first signal via the MCU device comprises:
sending a second control instruction to the MCU device, to control a DSP device via the MCUdevice to receive the first signal from the relay control device, and to control the DSP device to process the first signal, so as to obtain a first processed signal; and controlling a signal gating device via the MCU device to receive the processed signal from the DSP device, and controlling the signal gating device to transmit the first processed signal to an optical transmitter, wherein the second control instruction comprises information that the first link is in the signal transmission state.

6. The method according to claim 1, wherein the link status of the first link comprises: a signal transmission rate of the first signal is less than a first preset rate, and the signal transmission rate of the first signal is equal to the first preset rate.

7. The method according to claim 1, wherein the controlling transmission of the first signal via the MCU device comprises: controlling via the MCU device whether to directly transmit the first signal via a signal gating device.

8. The method according to claim 1, wherein the link status of the first link further comprises that a signal amplitude of the first signal is less than a first preset amplitude, and the determining a link status of the first link by using the first signal comprises:
in response to the signal amplitude of the first signal being less than the first preset amplitude, determining that the first link is in an idle state, wherein the first preset amplitude is set based on a standard amplitude in the CXL protocol.

9. The method according to claim 8, wherein the sending a control instruction to a microcontroller unit (MCU) device based on the link status of the first link, to control transmission of the first signal via the MCU device comprises:
sending a third control instruction to the MCU device, to control a DSP device via the MCU device to receive the first signal from the relay control device, and to control the DSP device to perform noise suppression on the first signal, so as to obtain a second processed signal; and controlling a signal gating device via the MCU device to receive the second processed signal from the DSP device, and controlling the signal gating device to transmit the second processed signal to an optical transmitter, wherein the third control instruction comprises information that the first link is in the idle state.

10. The method according to claim 1, wherein the method further comprises:
transmitting the first signal to an optical transmitter via a signal gating device;
performing optical signal conversion on the first signal via the optical transmitter, to obtain a first optical signal; and
transmitting the first optical signal to a second device via the optical transmitter.

11. The method according to claim 1, wherein the method further comprises:
receiving a second signal sent by a signal gating device, wherein the second signal is an electrical signal;
recovering the second signal, to obtain a recovered signal; and
sending the recovered signal to the first device through the first link.

12. A method for controlling signal transmission , applied to an MCU device, and comprising:
obtaining a second signal sent by a second device, wherein the second signal is obtained by performing electrical signal conversion on a received optical signal by an optical receiver, and the optical signal is sent by the second device; and
transmitting the second signal to a relay control device, wherein the relay control device is a device supporting an open interconnection standard CXL protocol, and the relay control device is configured to transmit the second signal to a first device through a first link after recovering the second signal.

13. The method according to claim 12, wherein a link status of the first link comprises: a signal transmission rate of a first signal is less than a first preset rate, and the signal transmission rate of the first signal is equal to the first preset rate; and the first signal is an electrical signal; and
the relay control device is further configured to send a control instruction to the microcontroller unit (MCU) device based on the link status of the first link, to control via the MCU device whether to directly transmit the first signal via a signal gating device, wherein the MCU device is connected to the relay control device.

14. The method according to claim 12, wherein the obtaining a second signal sent by a second device comprises:
obtaining the second signal from a DSP device or a signal gating device, wherein the second signal is a signal transmitted by the optical receiver to the DSP device and the signal gating device.

15. The method according to claim 12, wherein the transmitting the second signal to a relay control device comprises:
in response to a signal amplitude of the second signal being less than or equal to a second preset amplitude, sending a third control instruction to a DSP device, to control the DSP device to perform noise suppression on the second signal, so as to obtain a noise-suppressed signal; and
sending a fourth control instruction to a signal gating device, to control the signal gating device to transmit the noise-suppressed signal to the relay control device.

16. The method according to claim 12, wherein the transmitting the second signal to a relay control device comprises: controlling, based on a register value that represents a link status and that is in the relay control device, a DSP device to transmit, to the relay control device, a signal obtained after noise suppression is performed on the second signal.

17. The method according to claim 12, wherein the method further comprises:
receiving, through the first link, a first control instruction sent by the relay control device, wherein the first control instruction comprises information that the first link is in a link training state, the first link connects the first device to the relay control device, and the link training state is used to indicate that a signal transmission rate of a first signal is less than a first preset rate; and
responding to the first control instruction, to control a signal gating device to receive the first signal from the relay control device, and to control the signal gating device to transmit the first signal to an optical transmitter, wherein the first signal is an electrical signal received by the relay control device from the first device through the first link.

18. The method according to claim 12, wherein the method further comprises:
receiving, through the first link, a second control instruction sent by the relay control device, wherein the second control instruction comprises information that the first link is in a signal transmission state, the first link connects the first device to the relay control device, and the signal transmission state is used to indicate that a signal transmission rate of a first signal is equal to a first preset rate; and
responding to the second control instruction, to control a DSP device to receive the first signal from the relay control device, to control the DSP device to process the first signal, so as to obtain a first processed signal, and to control a signal gating device to transmit the first processed signal to an optical transmitter.

19. The method according to claim 12, wherein the method further comprises:
receiving, through the first link, a third control instruction sent by the relay control device, wherein the third control instruction comprises information that the first link is in an idle state, the first link connects the first device to the relay control device, and the idle state is used to indicate a state that a signal amplitude of a first signal is less than a first preset amplitude and that is further comprised in a link status of the first link; and
responding to the third control instruction, to control a DSP device to receive the first signal from the relay control device, to control the DSP device to perform noise suppression on the first signal, so as to obtain a second processed signal, and to control a signal gating device to receive the second processed signal from the DSP device and then transmit the second processed signal to an optical transmitter.

20. The method according to any one of claims 17 to 19, wherein the method further comprises:
performing, via the optical transmitter, optical signal conversion on a signal received from the signal gating device, and transmitting a converted optical signal to the second device.

21. An apparatus for controlling signal transmission , comprising:
a relay control device, wherein the relay control device is connected to a first device through a first link, the relay control device is a device supporting an open interconnection standard CXL protocol, and in response to the first device sending a first signal, the relay control device is configured to receive the first signal through the first link, and is configured to determine a link status of the first link by using the first signal; and
an MCU device, wherein the MCU device is connected to the relay control device, and is configured to control, according to a control instruction sent by the relay control device, a signal gating device and a DSP device to transmit the first signal, wherein the control instruction comprises the link status of the first link, and both the signal gating device and the DSP device are connected to the MCU device.

22. The apparatus according to claim 21, wherein the apparatus further comprises:
an optical transmitter, wherein the optical transmitter is connected to the signal gating device, is configured to receive the first signal sent by the signal gating device, is configured to perform optical signal conversion on the first signal, to obtain a first optical signal, and is configured to transmit the first optical signal to a second device.

23. The apparatus according to claim 21, wherein the apparatus further comprises:
an optical receiver, wherein the optical receiver is connected to a second device, is configured to perform electrical signal conversion on an optical signal received from the second device, to obtain a second signal, and is configured to send the second signal to the DSP device and the signal gating device.

24. The apparatus according to claim 23, wherein the MCU device is further configured to: obtain the second signal from the DSP device or the signal gating device, and transmit the second signal to the relay control device via the DSP device and the signal gating device, wherein the DSP device is configured to process the second signal according to a control instruction sent by the MCU device, and the signal gating device is configured to send a processed second signal to the relay control device according to a control instruction sent by the MCU device.

25. The apparatus according to claim 23, wherein the first signal is an electrical signal, and the link status of the first link comprises: a signal transmission rate of the first signal is less than a first preset rate, and the signal transmission rate of the first signal is equal to the first preset rate; the MCU device controls the signal gating device to transmit the first signal to an optical transmitter; optical signal conversion is performed on the first signal via the optical transmitter, to obtain a first optical signal; and the first optical signal is transmitted to the second device via the optical transmitter.

26. A system for controlling signal transmission , wherein the system for controlling signal transmission comprises the apparatus for controlling signal transmission according to any one of claims 21 to 25.

27. A computer non-volatile readable storage medium, wherein the computer non-volatile readable storage medium stores a computer program, when the computer program is executed by a processor, steps of the method according to any one of claims 1 to 11 are implemented, or steps of the method according to any one of claims 12 to 20 are implemented.

28. An electronic device, comprising a memory, a processor, and a computer program that is stored in the memory and capable of being run on the processor, wherein when the processor executes the computer program, steps of the method according to any one of claims 1 to 11 are implemented, or steps of the method according to any one of claims 12 to 20 are implemented.
